# EUROPÄISCHE PATENTSCHRIFT

(11) **EP 0 761 502 B1**
(45) Veröffentlichungstag und Bekanntmachung des Hinweises auf die Patenterteilung: **03.06.1998**
(21) Anmeldenummer: 96112261.1
(22) Anmeldetag: 30.07.1996
(51) Int. Cl.: B60R 1/12

(54) **Sicherheitsvorrichtung für Fahrzeuge**
Security device for vehicles
Dispositif de sécurité pour véhicules

(30) Priorität: 23.08.1995 DE 19530913
(43) Veröffentlichungstag der Anmeldung: 12.03.1997
(73) Patentinhaber: HAPPICH Fahrzeug- und Industrieteile GmbH, 42285 Wuppertal (DE)
(72) Erfinder: Baader, Hans-Joachim, 42329 Wuppertal (DE)

(56) Entgegenhaltungen:
- EP-A- 0 094 856
- EP-A- 0 490 734
- EP-A- 0 694 452
- WO-A-81/02871
- DE-A- 3 635 473
- DE-A- 4 128 306
- DE-A- 4 300 077
- GB-A- 2 161 440
- GB-A- 2 266 870
- US-A- 2 561 582

## Beschreibung

Die Erfindung bezieht sich auf eine Sicherheitsvorrichtung für Omnibusse oder Lastkraftwagen.

Zu den Sicherheitsvorrichtungen von Omnibussen oder Lastkraftwagen sind u. a. Außenspiegel zu zählen, die die Beobachtung des nachfolgenden Verkehrs ermöglichen und auch Hilfestellung beim Rangieren bieten.

Eine durch die GB 2 266 870 A bekanntgewordene Sicherheitsvorrichtung der genannten Art besteht aus einem an der Außenseite einer Fahrzeugkarosserie befestigbaren Gehäuse als Tragevorrichtung für einen Rückblickspiegel, einen Rampenspiegel und eine Blinkleuchte.

Die WO 81 02871 A zeigt eine Sicherheitsvorrichtung für Fahrzeuge, insbesondere Lastkraftwagen, mit einem Rückfahrscheinwerfer, der am Außenspiegel des Fahrzeugs befestigt ist. Eine ähnliche Einrichtung zeigt die DE 36 35 473 A, die einen Fahrzeugaußenspiegel mit Einparkleuchte betrifft, die über einen Außenspiegelhalter an der seitlichen Beifahrertür nach hinten unten gerichtet befestigt ist.

Die US 2 561 582 A zeigt eine Sicherheitsvorrichtung für Fahrzeuge mit einem Rückblickspiegel, der mit Signallampen und Richtungspfeilen kombiniert ist.

Die GB 2 161 440 A zeigt eine Sicherheitsvorrichtung für Fahrzeuge mit einem Außenspiegel der mit Signallampen, Richtungsanzeiger und Parkleuchten kombiniert ist.

Sicherheitsvorrichtungen in Form von Fahrzeugaußenspiegeln, die mit einem motorischen Stellantrieb ausgerüstet sind, zeigen die Dokumente EP 0 094 856, EP 0 694 452 und EP 0 490 734.

Die DE 41 28 306 beschreibt eine Bedienungseinrichtung für die Bedienung von Fahrzeugaußenspiegeln, die mit einer Begrenzungsleuchte, einer Spiegelheizung und einem motorischen Stellantrieb ausgestattet sind.

Die DE 43 00 077 zeigt eine Sicherheitsvorrichtung für Fahrzeuge mit einem Außenspiegel, einem Blinklicht und einem Bremslicht.

Der Erfindung liegt hiernach die Aufgabe zugrunde eine Sicherheitsvorrichtung der durch die GB 2 266 870 A bekanntgewordenen Art durch Zuordnung weiterer, aus verschiedenen Druckschriften jeweils für sich bekanntgewordenen Funktionselementen, die sich gegenseitig fördern und ergänzen sollen, zu verbessern.

Demgemäß ist Gegenstand der Erfindung eine Sicherheitsvorrichtung für Omnibusse oder Lastwagen mit einem an der Außenseite der Fahrzeugkaros-Serie befestigbaren Gehäuse als Tragevorrichtung für einen Rückblickspiegel, einen Rampenspiegel, einen Rückfahrscheinwerfer, eine Blinkleuchte, Bremsleuchten, einen Reflektor und eine Heizvorrichtung, wobei das über einen Sockelteil mit der Fahrzeugkarosserie schraubgemäß verbindbare, als Kunststoff-Spritzgußteil mit darin eingelagerter Verstärkungseinlage ausgebildete Gehäuse über eine Stellvorrichtung mit zwei etwa senkrecht zueinander ausgerichteten Achsen sowie über einen motorischen Stellantrieb für die Stellvorrichtung verfügt.

Die erfindungsgemäße Sicherheitsvorrichtung besteht aus einem großvolumigen Baukörper, der zunächst mit einem Rückblickspiegel ausgerüstet ist, der ohne weiteres handelsüblicher Art sein kann. Der Baukörper trägt weiterhin einen Rampenspiegel, zur gegenüber dem Rückblickspiegel vergrößerten Wiedergabe des Nahbereichs. Ein solcher Rampenspiegel dient zur Erleichterung des Rangierens. Die Integration eines Rückfahrscheinwerfers ermöglicht die Ausleuchtung des Schwenkbereichs bei Rangierbewegungen des Fahrzeugs in Rückwärtsfahrt. Die schließlich vom Gehäuse getragene Blinkleuchte dient aufgrund ihrer hochgesetzten Anordnung zur weit sichtbaren Erkennung von Richtungsänderungen des Fahrzeugs. Um die Sicherheitsvorrichtung zu vervollkommnen, ist sie auch mit Bremsleuchten und einem Reflektor sowie noch zusätzlich mit einer Heizeinrichtung ausgerüstet, um ein Beschlagen oder Vereisen der Einzelelemente im Winterbetrieb des Fahrzeugs zu verhindern.

Ein Ausführungsbeispiel der Erfindung ist auf der Zeichnung in vereinfachter Darstellungsmanier gezeigt.

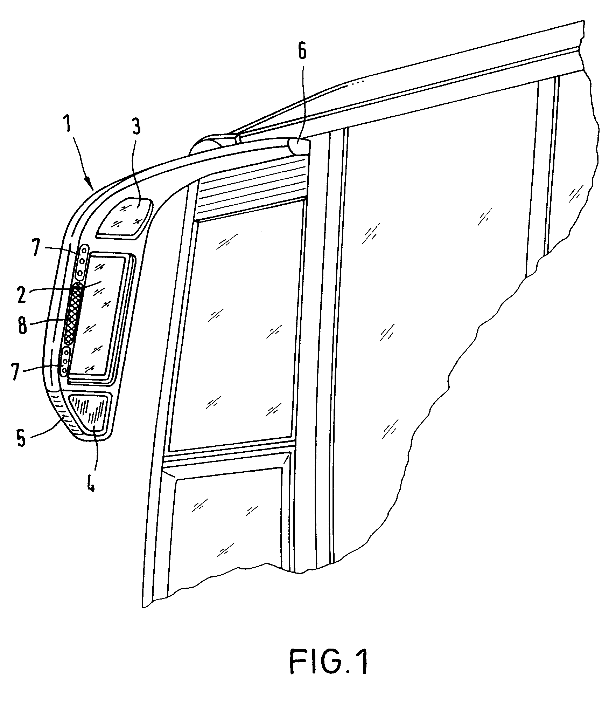

Fig. 1 läßt einen vorderen Seitenbereich eines Omnibusses erkennen. Im Übergangsbereich vom Dach zur Seitenwand des Omnibusses ist ein relativ großvolumiges Gehäuse 1 befestigt, welches als Tragevorrichtung für einen Rückblickspiegel 2, einen Rampenspiegel 3, einen Rückfahrscheinwerfer 4, eine Blinkleuchte 5, Bremsleuchten 7 und einen Reflektor 8 dient. Der Reflektor 8 macht das äußere Abmaß der Buskontur bei schlechten Sichtverhältnissen sichtbar.

Das Gehäuse 1 ist über einen Sockelteil 6 mit der Fahrzeugkarosserie schraubgemäß verbunden. Im Verbindungsbereich vom Gehäuse 1 und Sockelteil 6 befindet sich eine nicht näher dargestellte Stellvorrichtung, die über einen motorischen Stellantrieb verfügt, um die gesamte Sicherheitsvorrichtung um zwei etwa senkrecht zueinander ausgerichtete Schwenkachsen verstellen zu können.

Das Gehäuse 1 besteht aus einem ein- oder mehrteiligen Kunststoff-Spritzgußteil und weist eingelagerte Verstärkungseinlagen (nicht gezeigt) auf.

## Patentansprüche

1. Sicherheitsvorrichtung für Omnibusse oder Lastkraftwagen mit einem an der Außenseite der Fahrzeugkarosserie befestigbaren Gehäuse (1) als Tragevorrichtung für
- einen Rückblickspiegel (2),
- einen Rampenspiegel (3),
- einen Rückfahrscheinwerfer (4),
- eine Blinkleuchte (5),
- Bremsleuchten (7),
- einen Reflektor (8) und
- eine Heizvorrichtung,
wobei das über einen Sockelteil (6) mit der Fahrzeugkarosserie schraubgemäß verbindbare, als Kunststoff-Spritzgußteil mit darin eingelagerter Verstärkungseinlage ausgebildete Gehäuse (1) über eine Stellvorrichtung mit zwei etwa senkrecht zueinander ausgerichteten Achsen sowie über einen motorischen Stellantrieb für die Stellvorrichtung verfügt.

## Claims

1. Safety device for buses or heavy goods vehicles, having a housing (1), which can be attached to the outside of the vehicle body, as a carrying device for
- a rear-view mirror (2),
- a ramp mirror (3),
- a reversing light (4),
- a blinker (5),
- brake lights (7),
- a reflector (8) and
- a heating device,
the housing (1), which can be screwed to the vehicle body by means of a base part (6) and is designed as a plastic injection-moulding part with a reinforcing insert integrated therein, having an adjusting device with two axes, disposed so as to be approximately perpendicular to one another, and a motor-powered adjusting drive for the adjusting device.

## Revendications

1. Dispositif de sécurité pour autobus ou camion comprenant un boîtier (1) pouvant être fixé sur la face extérieure de la carrosserie du véhicule afin de faire fonction de dispositif de support pour un rétroviseur (2), un miroir de rampe (3), un feu marche-arrière (4), un feu clignotant (5), des feux d'arrêt (7), un réflecteur (8) et un dispositif de chauffage ; lequel boîter (1), qui est fabriqué sous la forme d'une pièce moulée par injection en matière plastique, qui comprend une pièce rapportée de renforcement et qui peut être vissé à la carrosserie du véhicule par l'intermédiaire d'un socle (6), est muni d'un dispositif de réglage comportant deux axes orientés perpendiculairement l'un par rapport à l'autre ainsi que d'un servomécanisme actionné par moteur commandant le dispositif de réglage.
